# EUROPEAN PATENT APPLICATION

(11) **EP 4 712 042 A1**
(43) Date of publication of application: **18.03.2026**
(21) Application number: 24803272.4
(22) Date of filing: 11.03.2024
(51) Int. Cl.: G06V 10/34, G06T 7/00, G06T 7/246, G06V 20/52, H04N 7/18, G06V 40/10, G06V 40/20

(54) **RUNNING DETECTION SYSTEM, RUNNING DETECTION METHOD, AND RUNNING DETECTION PROGRAM**

(30) Priority: 09.05.2023 JP 2023077080
(71) Applicant: KONICA MINOLTA, INC., Tokyo 100-7015 (JP)
(72) Inventor: MATSUSHIMA, Katsunori, Tokyo 100-7015 (JP); YOSHIZAWA, Masanori, Tokyo 100-7015 (JP)
(74) Representative: Gille Hrabal Partnerschaftsgesellschaft mbB Patentanwälte
(86) International application number: PCT/JP2024/009276
(87) International publication number: WO 2024/232157

(57) **Abstract**

To provide a running detection system, a running detection method, and a running detection program capable of accurately calculating the movement speed of a person even in a case where a monitoring region, an installation location of a camera, or the like is different or in a case where the size of the person changes.

The running detection system includes a video acquirer 330, a skeleton detector 410, and a speed calculator 340. The video acquirer 330 acquires a video obtained by imaging a predetermined region including a mobile object. The skeleton detector 410 detects skeleton information of the mobile object included in the video. The speed calculator 340 calculates information on the movement speed of the mobile object on the basis of the skeleton information of the mobile object.

## Description

### Technical Field

The present invention relates to a running detection system, a running detection method, and a running detection program.

### Background Art

In general, in a place where a plurality of persons go in and out or come and go, whether indoors or outdoors, a movement route and traffic rules are defined in many cases in order to avoid collision or trouble between persons. This is because, in a place where there are many people, when a person suddenly starts to run or moves while ignoring a defined movement route, a risk of occurrence of an accident such as collision with another person increases.

Such movement routes and passage rules are also defined and enforced, for example, in workplaces such as offices and factories of companies. When the movement routes and the passage rules are observed, disasters in a work environment are reduced, which leads to realization of a safe and secure society.

Conventionally, for example, a monitoring system has been known that detects an abnormal behavior related to movement of a person on the basis of a captured image of the person and provides a notification in a case where an abnormality is detected (Patent Literature 1). This monitoring system detects a person (passenger) from the size and shape of the person detected by a background subtraction method on a platform of a station, and calculates a movement vector of the person. Then, the monitoring system calculates a speed from the movement distance of the person between captured images (frames) on the basis of the movement vector, and determines a behavior of the person at a certain speed or higher as a dangerous behavior. The dangerous behavior is, for example, a rush onto a train.

### Citation List

### Patent Literature

Patent Literature 1: JP 2019-41207 A

### Summary of Invention

### Technical Problem

However, in the above-described monitoring system, for example, when the monitoring region or the installation location of a camera is different, the background of the person to be detected may change. Therefore, it is difficult to accurately calculate the movement speed of the person from the shape of the person detected by the background subtraction method. Furthermore, also in a case where a part of the body of a person is hidden, a case where the size of a person changes due to the position or movement of the person, or the like, it is difficult to accurately calculate the movement speed of the person from the size and shape of the person detected by the background subtraction method.

The present invention has been made to solve the above-mentioned problems. That is, a main object of the present invention is to provide a running detection system, a running detection method, and a running detection program capable of accurately calculating the movement speed of a person even in a case where a monitoring region, an installation location of a camera, or the like is different or in a case where the size of the person changes.

### Solution to Problem

The above-described problems of the present invention are solved by the following means.
(1) A running detection system including: a video acquirer that acquires a video obtained by imaging a predetermined region including a mobile object; a skeleton detector that detects skeleton information of the mobile object included in the video; and a speed calculator that calculates information on a movement speed of the mobile object on the basis of the skeleton information of the mobile object.
(2) The running detection system according to (1) further including: a detection area setter that sets a plurality of detection areas that do not overlap each other for detecting the mobile object in the video of the predetermined region, in which the speed calculator calculates the information on the movement speed of the mobile object on the basis of information on a movement time from detection of entry of the mobile object into one detection area of the plurality of detection areas to detection of entry of the mobile object into another detection area of the plurality of detection areas, and a distance between the one detection area and the another detection area in which entry of the mobile object has been detected.
(3) The running detection system according to (2), in which the skeleton information includes position information of a plurality of joint points of the mobile object and information on connection between the plurality of joint points, and the speed calculator determines, on the basis of the skeleton information of the mobile object, whether or not a specific joint point of the mobile object is located in the one detection area or the another detection area, and detects, on the basis of a determination result, entry of the mobile object into the one detection area or the another detection area.
(4) The running detection system according to (1), in which the speed calculator estimates a position and/or a size of the mobile object on the basis of the skeleton information of the mobile object, and calculates the information on the movement speed of the mobile object on the basis of the position and/or the size of the mobile object that has been estimated.
(5) The running detection system according to (4) further including: an attribute information acquirer that acquires attribute information of the mobile object on the basis of the skeleton information of the mobile object, in which the speed calculator calculates the information on the movement speed of the mobile object on the basis of the skeleton information and the attribute information of the mobile object.
(6) The running detection system according to (5), in which the mobile object is a person, the attribute information is information on a generation of the mobile object, and the speed calculator corrects the size of the mobile object on the basis of the attribute information and calculates the information on the movement speed of the mobile object on the basis of the size that has been corrected.
(7) The running detection system according to (1) further including:
   a posture estimator that estimates a posture of the mobile object on the basis of the skeleton information of the mobile object; and a movement means determiner that determines whether or not the mobile object is using movement means, in which the mobile object is a person, the posture estimator determines whether the mobile object is in a standing position or in a sitting position, and the movement means determiner determines that the mobile object is using movement means in a case where the mobile object is in the sitting position as a result of determination by the posture estimator.
(8) The running detection system according to (2), in which the plurality of detection areas are set so as to be arranged in a linear shape or a curved shape in the video of the predetermined region.
(9) The running detection system according to (1) further including: a recorder that records a video acquired by the video acquirer together with time and date when the video was imaged.
(10) The running detection system according to any one of (1) to (9) further including: a requirement setter that sets a requirement related to movement of the mobile object; a requirement observance determiner that determines, on the basis of the information on the movement speed calculated by the speed calculator, whether or not the movement speed of the mobile object satisfies the requirement; and a notifier that provides a notification in a case where the movement speed of the mobile object does not satisfy the requirement as a result of determination by the requirement observance determiner.
(11) The running detection system according to (10), in which the requirement related to the movement is a requirement for an upper limit speed, the requirement observance determiner determines whether or not the movement speed of the mobile object satisfies the requirement for the upper limit speed, and the notifier provides the notification in a case where the movement speed of the mobile object does not satisfy the requirement for the upper limit speed.
(12) The running detection system according to (11) further including: a storage section that stores an upper limit speed for each attribute of the mobile object; and an attribute information acquirer that acquires attribute information of the mobile object on the basis of the skeleton information of the mobile object, in which the requirement setter sets an upper limit speed of the mobile object in accordance with the attribute information of the mobile object.
(13) A running detection method including: a step (a) of acquiring a video obtained by imaging a predetermined region including a mobile object; a step (b) of detecting skeleton information of the mobile object included in the video; and a step (c) of calculating information on a movement speed of the mobile object on the basis of the skeleton information of the mobile object.
(14) The running detection method according to (13) further including: a step (d) of determining whether or not the movement speed of the mobile object satisfies a requirement on the basis of the information on the movement speed calculated in the step (c), and providing a notification in a case where the movement speed of the mobile object does not satisfy the requirement as a result of determination.
(15) A running detection program for causing a computer to execute a process including: a step (a) of acquiring a video obtained by imaging a predetermined region including a mobile object; a step (b) of detecting skeleton information of the mobile object included in the video; and a step (c) of calculating information on a movement speed of the mobile object on the basis of the skeleton information of the mobile object.
(16) The running detection program according to (15), in which the process further includes a step (d) of determining whether or not the movement speed of the mobile object satisfies a requirement on the basis of the information on the movement speed calculated in the step (c), and providing a notification in a case where the movement speed of the mobile object does not satisfy the requirement as a result of determination.

### Advantageous Effects of Invention

According to the present invention, since information on the movement speed of a mobile object is calculated on the basis of skeleton information of the mobile object, the mobile object can be detected regardless of the background of the mobile object. Furthermore, it is possible to determine, on the basis of the skeleton information, whether or not the entire mobile object has been detected. Therefore, even in a case where the monitoring region, the installation location of the camera, or the like is different or in a case where the size of the person changes, it is possible to accurately calculate the movement speed of the person.

### Brief Description of Drawings

Fig. 1 is a diagram illustrating a schematic configuration of an information processing system according to an embodiment of the present invention.
Fig. 2 is a block diagram illustrating a schematic configuration of an imaging apparatus illustrated in Fig. 1.
Fig. 3 is a schematic block diagram illustrating a hardware configuration of a first information processing apparatus illustrated in Fig. 1.
Fig. 4 is a flowchart illustrating a processing procedure of a running detection method by the information processing system according to the embodiment.
Fig. 5 is a schematic diagram illustrating a method of acquiring a video of a mobile object.
Fig. 6 is a schematic diagram illustrating a method of setting a detection area for a video obtained by imaging a predetermined region.
Fig. 7 is a schematic diagram illustrating a method of detecting entry of a mobile object into a detection area.
Fig. 8 is a schematic diagram illustrating a method of calculating information on the movement speed of the mobile object in the X direction (in a case where the movement speed is low).
Fig. 9 is a schematic diagram illustrating a method of calculating information on the movement speed of the mobile object in the X direction (in a case where the movement speed is high).
Fig. 10 is a schematic diagram illustrating a method of calculating information on the movement speed of the mobile object in the Y direction.
Fig. 11 is a schematic diagram illustrating a method of calculating information on the movement speed of the mobile object in the Y direction.
Fig. 12 is a schematic diagram illustrating a notification that the movement speed of the mobile object does not satisfy a predetermined requirement.
Fig. 13 is a schematic diagram illustrating recording of a determination result.
Fig. 14 is a schematic diagram illustrating movable directions of the mobile object.
Fig. 15 is a schematic diagram illustrating privacy protection for the mobile object.
Fig. 16 is a schematic diagram illustrating a video in a case where the mobile object is approaching the imaging apparatus.

### Description of Embodiment

Hereinafter, with reference to the drawings, a running detection system, a running detection method, and a running detection program according to an embodiment of the present invention will be described. Note that in the drawings, the same components are denoted by the same reference signs, and redundant description is omitted. In addition, dimensional ratios in the drawings are exaggerated for convenience of description and may be different from actual ratios.

### (Embodiment)

The running detection system according to the present embodiment calculates the movement speed of a mobile object on the basis of skeleton information detected from a video obtained by imaging a predetermined region including the mobile object. The skeleton information may include information on a plurality of joint points of the mobile object and connection between the joint points. The information on connection between the joint points may be expressed by, for example, a node connecting the joint points. In addition, the running detection system determines whether or not the movement speed of the mobile object satisfies a preset requirement, and provides a notification to a user in a case where the requirement is not satisfied.

Furthermore, the mobile object may be, for example, a skeleton detectable object such as a person or an animal. Moreover, movement of the mobile object may be, for example, walking or running of the mobile object. Running may include the mobile object running by itself and the mobile object running by use of movement means. In the present specification, the movement means may be, for example, a bicycle, a motorcycle, a wheelchair, a stroller, a kickboard, a skateboard, a standing scooter, a unicycle, or the like.

Furthermore, the requirement may be a regulation, a promise, a rule, or the like that is determined in advance for the movement speed of the mobile object. The requirement may include, for example, an upper limit speed and/or a lower limit speed in a movement route of the mobile object, a direction of movement (a positive value or a negative value), and the like. Specifically, the requirement may be a law such as the Road Traffic Act (traffic rule) in a case where the movement route of the mobile object is on a public road, for example. Furthermore, in a case where the movement route of the mobile object is, for example, on the premises of a company, the requirement may be in-house regulations on passage. In addition, the requirement may be a rule, a use policy, a promise, or the like in a case where the movement route of the mobile object is, for example, inside a building of a public facility such as a train station, a library, or a children's library, or in a welfare facility such as a hospital or a nursing care facility.

### <Overall configuration of information processing system 100>

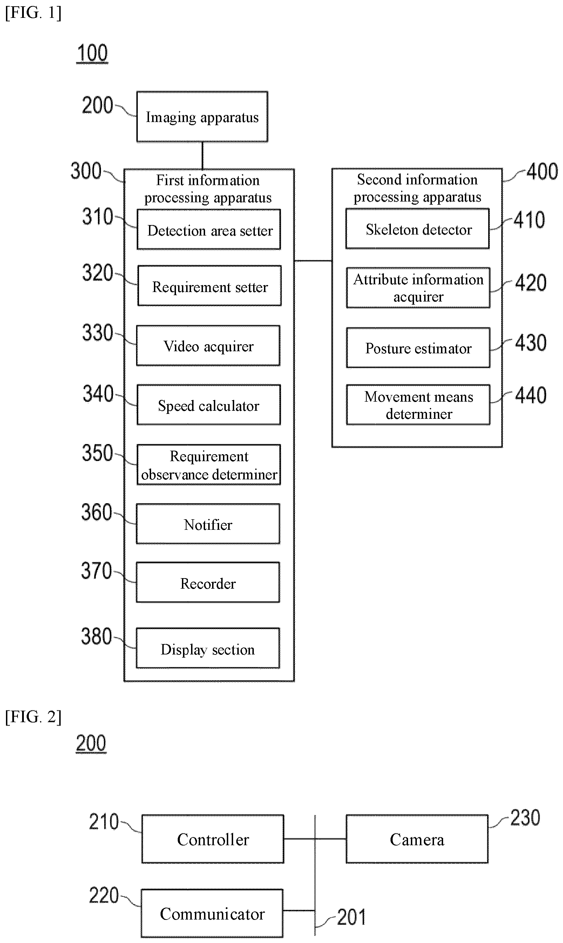

Fig. 1 is a block diagram illustrating a schematic configuration of an information processing system 100 according to the embodiment. The information processing system 100 includes, for example, an imaging apparatus 200, a first information processing apparatus 300, and a second information processing apparatus 400. The imaging apparatus 200 is communicably connected to the first information processing apparatus 300 by a communication network.

The first information processing apparatus 300 may be, for example, a mobile terminal such as a personal computer, a smartphone, a tablet terminal, or the like. In addition, the second information processing apparatus 400 may be, for example, a server, a personal computer, or the like. Note that some or all of the functions of the second information processing apparatus 400 may be executed by the first information processing apparatus 300 or the imaging apparatus 200. Conversely, some or all of the functions of the first information processing apparatus 300 may be executed by the second information processing apparatus 400 or the imaging apparatus 200. The first information processing apparatus 300 and the second information processing apparatus 400 constitute the running detection system.

### <Imaging apparatus 200>

Fig. 2 is a block diagram illustrating a schematic configuration of the imaging apparatus 200 illustrated in Fig. 1. The imaging apparatus 200 includes a controller 210, a communicator 220, and a camera 230, which are connected to each other by a bus 201. The imaging apparatus 200 is installed in a place where at least a part of the movement route of a mobile object (hereinafter, referred to as a "target mobile object") for which a movement speed is to be calculated is within a field of view of the camera 230. For example, in a case where a worker engaged in work in a factory of a company is set as the target mobile object, the imaging apparatus 200 is installed at a place where at least a part of the movement route of the worker falls within the field of view of the camera 230. In addition, in a case where the target mobile object is a passenger of a train at a train station, the imaging apparatus 200 is installed at a place where a platform of the station and a doorway of the train are within the field of view of the camera 230.

The controller 210 includes, for example, a central processing unit (CPU), and memories such as a random access memory (RAM) and a read only memory (ROM). The controller 210 controls each component of the imaging apparatus 200 and performs arithmetic processing in accordance with the running detection program.

The controller 210 transmits a plurality of captured images (frames) obtained by the camera 230 imaging a predetermined region to the first information processing apparatus 300 via the communicator 220. The predetermined region is a three-dimensional region including the movement route of the target mobile object. In addition, the controller 210 can transmit the time and date when the image was captured to the first information processing apparatus 300 together with the captured image.

The communicator 220 includes, for example, an interface circuit for communicating with the first information processing apparatus 300 or the like via the communication network.

The camera 230 may be, for example, a standard camera used as a security camera or a monitoring camera. Furthermore, the camera 230 may be a wide-angle camera having a wider angle of view than that of a standard camera. In the following description, in order to simplify the description, it is assumed that the camera 230 is a standard camera.

The camera 230 may be, for example, a visible light camera. The visible light camera may image a predetermined region by receiving, with a complementary metal oxide semiconductor (CMOS) sensor, reflected light of visible light reflected by an object in the predetermined region.

Furthermore, the camera 230 may be configured by using a near-infrared camera instead of the visible light camera. The infrared camera may image a predetermined region by irradiating the predetermined region with near-infrared light by a light emitting device (LED) and receiving, by a CMOS sensor, reflected light of the near-infrared light reflected by an object in the predetermined region. In this case, the image captured by the camera 230 may be a monochrome image in which each pixel represents the reflectance of the near-infrared light.

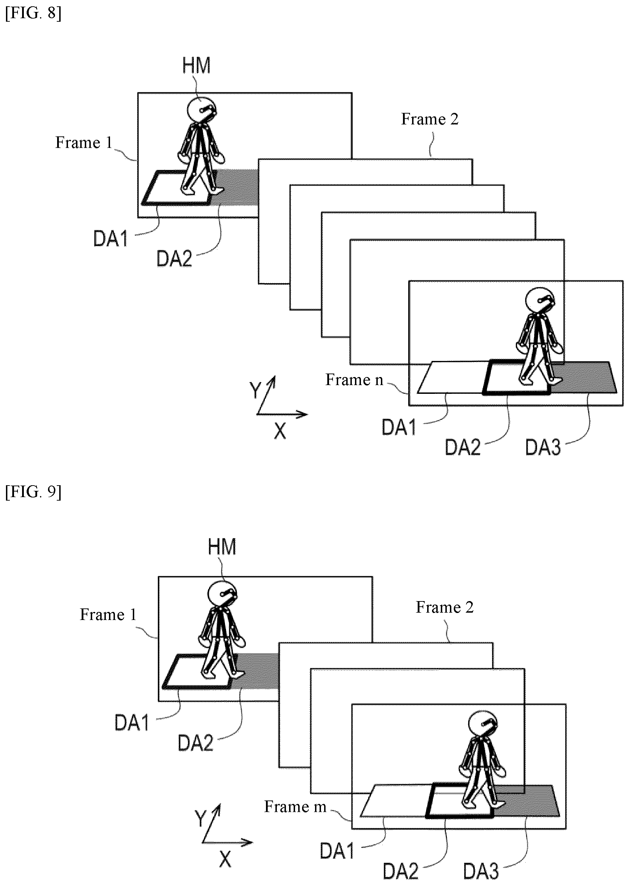

The imaging apparatus 200 may image the predetermined region as a moving image including a plurality of temporally continuous captured images (frames) at, a frame rate ranging from 15 fps to 30 fps, for example (see, for example, Figs. 8 and 9 to be described later). Furthermore, the camera 230 may be configured to use the near-infrared camera and the visible light camera in combination.

### <First information processing apparatus 300>

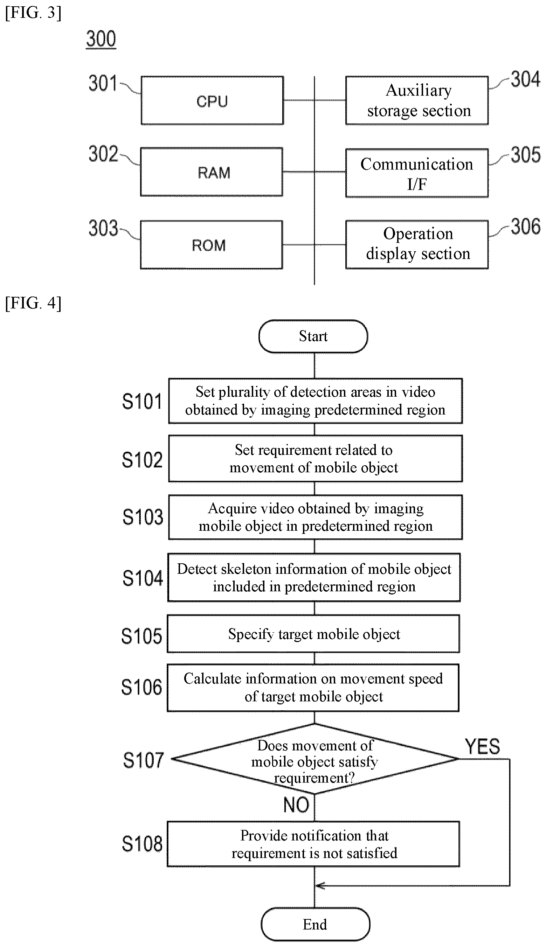

Fig. 3 is a schematic block diagram illustrating a hardware configuration of the first information processing apparatus 300 illustrated in Fig. 1. The first information processing apparatus 300 includes, for example, a CPU 301, a RAM 302, a ROM 303, an auxiliary storage section 304, a communication I/F 305, and an operation display section 306. The constituent elements of the first information processing apparatus 300 are connected to each other by an internal bus.

The auxiliary storage section 304 may include, for example, a solid state drive (SSD), a hard disk drive (HDD), or the like. The auxiliary storage section 304 stores, for example, a program such as the running detection program, a video obtained by imaging the predetermined region including the mobile object, the time and date when the video was imaged, and information on the requirement. For example, in a case where the movement route of the target mobile object is on a public road, the information on the requirement includes information on a legal speed, the direction of passage (for example, one way passage), a time zone of passage, and the like. In addition, for example, in a case where the movement route of the target mobile object is in a factory of a company, the information on the requirement includes a speed limit (an upper limit speed, a lower limit speed, or the like) of movement, a passage rule ("right-hand passage" or "left-hand passage"), and the like in in-house regulations. Furthermore, for example, in a case where the movement route of the target mobile object is in a train station, a building of a public facility, or the like, the information on the requirement includes prohibition of movement by running (rushing), a passage rule, and the like.

The communication I/F 305 is an interface circuit (e.g., a LAN card) for communicating with other apparatuses such as the imaging apparatus 200, the second information processing apparatus 400, and the like through a network.

The operation display section 306 includes an input section and an output section. The input section includes, for example, a touch screen, a keyboard, a mouse, and the like. The input section is used for a user to perform touch operation with the touch screen, character input with the keyboard, the mouse, and the like, various settings, and the like. In addition, the output section includes a display (display device) and displays a video or the like including the mobile object imaged by the imaging apparatus 200.

### [Functions of first information processing apparatus 300]

Next, the functions of the first information processing apparatus 300 will be described with reference to Fig. 1 again. The first information processing apparatus 300 functions as, for example, a detection area setter 310, a requirement setter 320, a video acquirer 330, a speed calculator 340, a requirement observance determiner 350, a notifier 360, a recorder 370, and a display section 380.

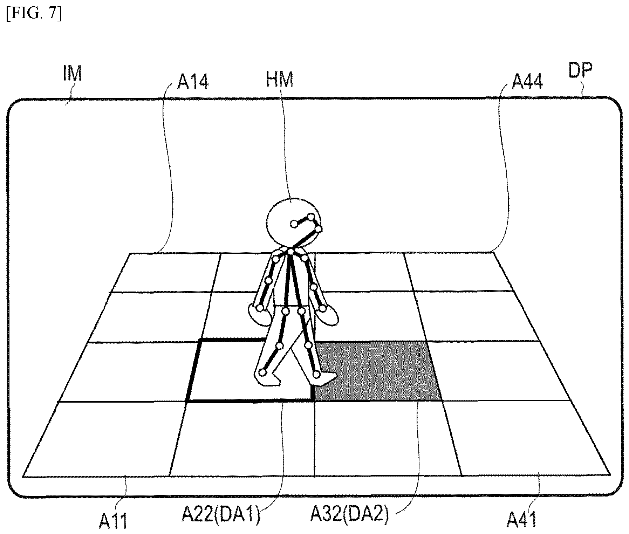

The detection area setter 310 sets, for example, a plurality of detection areas in a video of the predetermined region imaged by the imaging apparatus 200. The plurality of detection areas include, for example, at least a first detection area (for example, DA1 in Fig. 7) and a second detection area (for example, DA2 in Fig. 7) that does not overlap the first detection area. The plurality of detection areas are used when the speed calculator 340 calculates the movement speed of the mobile object. A specific example of the detection area and details of a setting method will be described later.

The requirement setter 320 sets a requirement related to movement of the mobile object. Information on the requirement set for the mobile object is stored in, for example, the auxiliary storage section 304. The user can appropriately update information on the requirement through the operation display section 306 in accordance with the revision of laws, regulations, rules, and the like. The updated information on the requirement is overwritten in the auxiliary storage section 304. Furthermore, in a case where a regulation or a rule on passage changes depending on a condition such as a time zone in which the mobile object travels or weather, the requirement setter 320 can also automatically change the information on the regulation in accordance with the above-described condition.

The video acquirer 330 acquires a video obtained by imaging the predetermined region including the mobile object and the imaging time and date of the video. The video may be, for example, captured images of a plurality of frames of the predetermined region including the mobile object captured by the imaging apparatus 200. The video acquirer 330 receives and acquires the video from the imaging apparatus 200 via the communication I/F 305, for example. In addition, in a case where the video imaged by the imaging apparatus 200 is stored in advance in the auxiliary storage section 304 or the like, the video acquirer 330 can also acquire the video by reading the video from the auxiliary storage section 304 or the like. Note that the video imaged by the imaging apparatus 200 may be stored in an external storage device or the like, and the video acquirer 330 may be configured to read the video from the above-described storage device. Alternatively, the video imaged by the imaging apparatus 200 may be recorded in a recording medium such as a USB memory, and the video acquirer 330 may acquire the video offline by reading the video from the above-described recording medium.

The speed calculator 340 calculates information on the movement speed of the target mobile object on the basis of the skeleton information of the target mobile object. The skeleton information may include position information of a plurality of joint points of eyes, a nose, a neck, shoulders, elbows, wrists, a waist, knees, ankles and the like, which are skeleton feature points of the mobile object, and nodes connecting the joint points (for example, see Fig. 7). The position information of the joint point may be coordinates (an X coordinate and a Y coordinate) of the joint point on the captured image. Details of a method of detecting the skeleton information of the mobile object will be described later. Note that in the present specification, in the drawings, illustration of some joint points may be omitted for convenience of illustration. The number of target mobile objects may be one or more.

In addition, the information on the movement speed may be a speed (e.g., speed per second, speed per minute, speed per hour, or the like) obtained by dividing a distance between detection areas in the real space by the movement time. Furthermore, the information on the movement speed may be the number of pixels of movement of the mobile object on the image per unit time or per frame. Furthermore, as described later, the information on the movement speed may be calculated on the basis of the rate of change over time in the size of the mobile object.

The requirement observance determiner 350 determines whether or not a preset requirement for the movement speed of the target mobile object is satisfied (whether or not the requirement is observed). For example, the requirement observance determiner 350 determines that the requirement for the movement speed of the mobile object is not satisfied in a case where the mobile object runs at a speed exceeding the upper limit speed or moves ignoring the movement direction or the movement route in a factory.

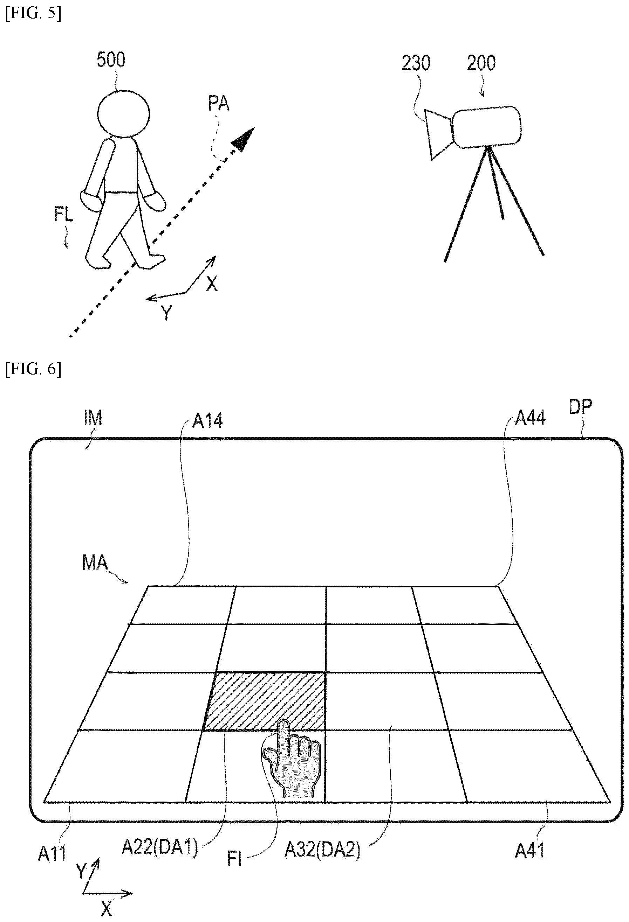

On the basis of the determination result of the requirement observance determiner 350, the notifier 360 provides a notification in a case where the requirement for the movement speed of the target mobile object is not satisfied. The notifier 360 notifies the user that the requirement for the movement speed of the target mobile object is not satisfied. For example, in a case where the target mobile object runs at a speed exceeding the speed limit, the notifier 360 may notify the user of the fact by displaying the fact on a display (a display DP illustrated in Fig. 6). Furthermore, in a case where the target mobile object moves while ignoring the movement direction or the movement route, the notifier 360 may notify the user of the fact by displaying the fact on the display.

The recorder 370 records the video acquired by the video acquirer 330 in the auxiliary storage section 304 together with the time and date when the video was imaged. Furthermore, the recorder 370 can also read the video recorded in the auxiliary storage section 304 from the imaging time and date that have been input.

The display section 380 causes the display to display the video acquired by the video acquirer 330. In addition, the display section 380 may display the joint points of the target mobile object and the nodes connecting the joint points in a superimposed manner on the target mobile object.

### <Second information processing apparatus 400>

Referring back to Fig. 1 again, the configuration and functions of the second information processing apparatus 400 will be described. Since the hardware configuration of the second information processing apparatus 400 is the same as the hardware configuration of the first information processing apparatus 300, a detailed description thereof will be omitted. The second information processing apparatus 400 functions as a skeleton detector 410, an attribute information acquirer 420, a posture estimator 430, and a movement means determiner 440.

The skeleton detector 410 detects skeleton information of the target mobile object included in the video acquired by the video acquirer 330. The skeleton detector 410 detects skeleton information by using a trained model for detecting joint points of a person from a rectangle including the person (hereinafter, also referred to as a "person rectangle"). The person rectangle is a region including joint points and nodes of a person in the image. As such a trained model, for example, models such as OpenPose (https://arxiv.org/abs/1812.08008), Deep Pose (https://arxiv.org/abs/1312.4659), and ResNet (https://arxiv.org/abs/1512.03385) are known.

The attribute information acquirer 420 acquires attribute information of the mobile object on the basis of the skeleton information of the mobile object. In the present embodiment, in a case where the mobile object is a person, the attribute information of the mobile object may be information on generation (e.g., an adult or a child). The attribute information acquirer 420 estimates the generation of the target mobile object from the detected skeleton information by using a trained model for generation estimation that has been trained in advance on the basis of the generations of mobile objects and the skeleton information of the generations, and outputs the estimated generation as information on the generation of the target mobile object.

The posture estimator 430 estimates the posture of the mobile object on the basis of the skeleton information of the mobile object. For example, the posture estimator 430 determines, on the basis of the skeleton information of the mobile object, whether the mobile object is standing (in a standing position) or sitting (in a sitting position).

For example, the posture estimator 430 estimates the posture of the target mobile object from a relationship set in advance on the basis of the positions, motions, and the like of the joint points of the mobile object, and outputs the estimated posture as the information on the posture. Alternatively, a trained model for posture estimation that has been trained as a method for posture estimation may be used.

The movement means determiner 440 determines, on the basis of the information on the posture of the target mobile object, whether or not the mobile object is using movement means. More specifically, in a case where the mobile object is in a sitting position as a result of the determination by the posture estimator 430, the movement means determiner 440 determines that the mobile object is using movement means.

In addition, the movement means determiner 440 can also estimate what kind of movement means is used by the target mobile object on the basis of the information on the posture of the target mobile object and the movement speed. For example, in a case where the mobile object is in a sitting position and is moving at a higher speed than that of a person running, the movement means determiner 440 determines that the mobile object is using movement means such as a bicycle. In addition, the movement means determiner 440 may also be configured to determine the movement means used by the mobile object on the basis of the positions, motion, and the like of the joint points of the mobile object. For example, the movement means determiner 440 determines that the mobile object is using movement means such as a bicycle in a case where the mobile object is in a sitting position and the joint points of the ankles of the mobile object are making circular motion.

### <Processing procedure of running detection method>

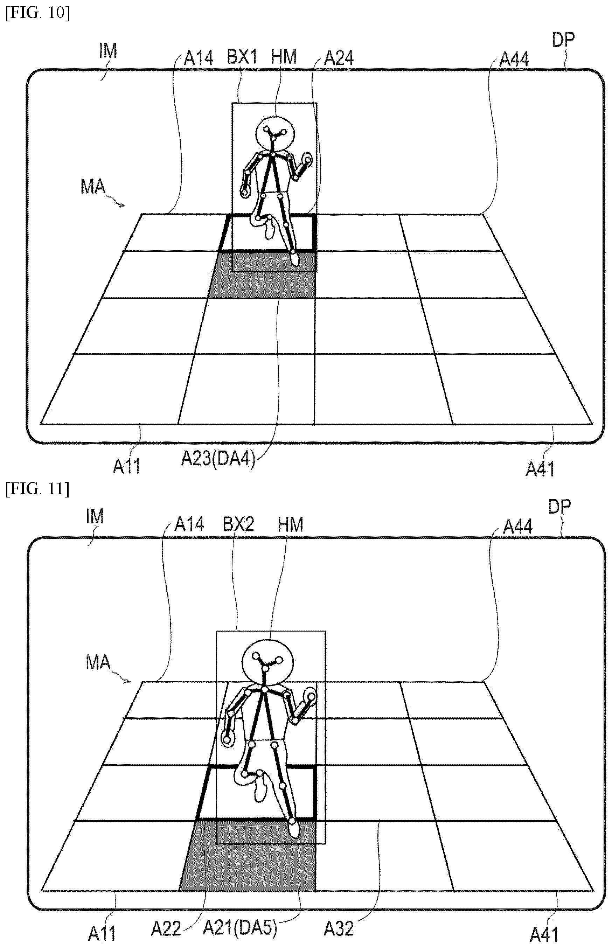

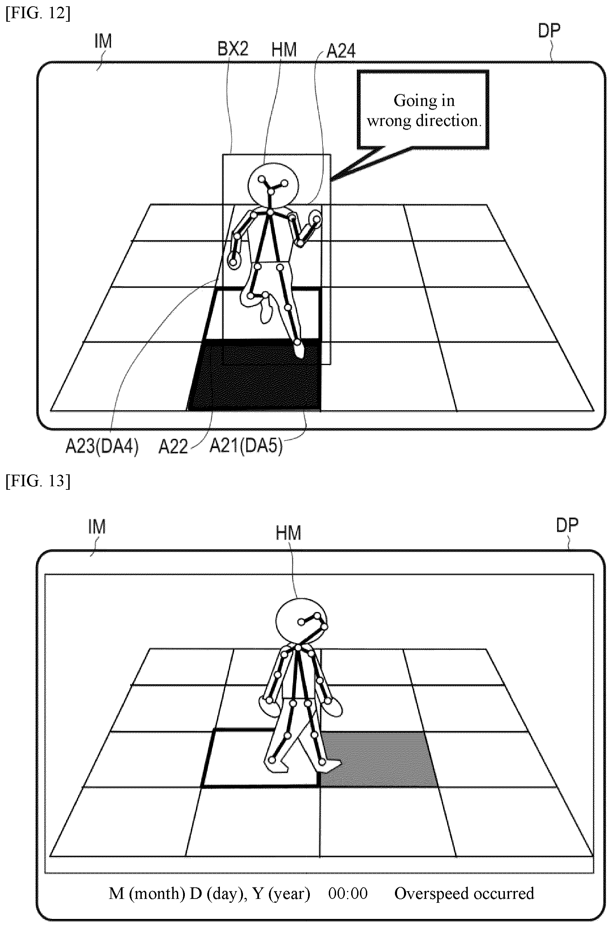

Fig. 4 is a flowchart illustrating a processing procedure of the running detection method by the information processing system 100 according to the embodiment. The processing of the flowchart illustrated in Fig. 4 is implemented by the CPU 301 executing the running detection program. Fig. 5 is a schematic diagram illustrating a method of acquiring a video of a mobile object, and Fig. 6 is a schematic diagram illustrating a method of setting a detection area for a video obtained by imaging a predetermined region. In addition, Fig. 7 is a schematic diagram illustrating a method of detecting entry of a mobile object into a detection area. Furthermore, Figs. 8 and 9 are schematic diagrams illustrating a method of calculating information on the movement speed of the mobile object. It is assumed that the movement speed of the mobile object in Fig. 9 is higher than the movement speed of the mobile object in Fig. 8. In addition, Figs. 10 and 11 are schematic diagrams illustrating a method of calculating information on the movement speed of the mobile object in the Y direction. In addition, Fig. 12 is a schematic diagram illustrating a notification that the movement speed of the mobile object does not satisfy a predetermined requirement, and Fig. 13 is a schematic diagram illustrating recording of a determination result.

In the following description, it is assumed that least one person is imaged as a target mobile object by the camera 230. Note that for convenience of illustration, the drawings illustrate a case where one person is imaged, but a plurality of persons may be imaged as target mobile objects.

As illustrated in Fig. 5, the imaging apparatus 200 is installed so as to be able to image a floor surface FL in a predetermined region and a person 500 moving on a movement route PA on the floor surface FL. More specifically, the installation position of the imaging apparatus 200, the orientation of the camera 230 (the optical axis direction of the lens), the lens distortion, and the like are adjusted such that the floor surface FL of the predetermined region and the person 500 in a standing position are within the field of view of the camera 230. For example, the imaging apparatus 200 is installed at a predetermined distance from the movement route PA of the person 500. In addition, the imaging apparatus 200 is adjusted such that the orientation of the camera 230 is slightly downward with respect to the horizontal direction so that the entire area of the floor surface FL in the predetermined region is within the field of view of the camera 230.

As illustrated in Fig. 4, after installation of the imaging apparatus 200, the detection area setter 310 sets a plurality of detection areas in a video obtained by imaging the predetermined region (step S101). The detection area setter 310 sets, for example, on the basis of a user (operator) input, a plurality of detection areas in the video of the predetermined region imaged by the imaging apparatus 200.

As illustrated in Fig. 6, the detection area setter 310 sets a two-dimensional region MA including the movement route of the person on the floor surface in a video IM of the predetermined region. For example, the user inputs the positions (X coordinate, Y coordinate) of the four corners of the two-dimensional region MA by touching or clicking the mouse on the corresponding positions through the operation display section 306. The detection area setter 310 sets the two-dimensional region MA on the basis of the input positions of the four corners. In addition, the detection area setter 310 divides the set two-dimensional region MA into a plurality of grid-shaped regions (for example, A11 to A44). In Fig. 6, a depth direction of the video IM imaged by the camera 230 of the imaging apparatus 200 (the optical axis direction of the lens of the camera 230) is defined as a Y direction, and a horizontal direction orthogonal to the depth direction is defined as an X direction. For example, each of the regions A11 to A44 corresponds to a rectangular region of sides L [m] × M [m] in the real space. For example, each of the regions A11 to A44 corresponds to a rectangular region of sides L [m] (X direction) × M [m] (Y direction) on the ground or the floor surface. The detection area setter 310 converts each of the distances L [m] and M [m] in the real space into the number of pixels in the video IM. Various known methods can be applied to the conversion from the distance in the real space into the number of pixels in the video IM. For example, the following method may be used as a simple method. When the imaging apparatus 200 is installed, the detection area setter 310 images an object having known lengths in the X direction and the Y direction with the imaging apparatus 200, and acquires the number of pixels corresponding to the length of the object. Alternatively, the detection area setter 310 images objects such as poles indicating four corners of the two-dimensional region MA corresponding to entirety of the regions A11 to A44 on the floor surface by using the imaging apparatus 200, and acquires the number of pixels corresponding to the length of the integrated rectangular region. The detection area setter 310 calculates a mathematical expression or a table for converting the real space distance into the number of pixels by imaging the object and acquiring the number of pixels at different positions in the Y direction.

The display section 380 causes the display DP to display the grid-shaped regions A11 to A44 on the basis of the number of pixels converted by the detection area setter 310. Note that in Fig. 6, a case where the two-dimensional region MA is divided into four regions in each of the X direction and the Y direction is illustrated as an example. However, the number of divisions in the X direction and the Y direction can be arbitrarily set by the user. The user can input the number of divisions in the X direction and the Y direction through the operation display section 306, for example.

The detection area setter 310 allows the user to select a detection area from these regions A11 to A44. More specifically, the user selects a detection area by, for example, touching a corresponding region on the touch screen. Alternatively, the user selects a detection area by moving a pointer displayed on the display DP to a region corresponding to the detection area and clicking the mouse.

Fig. 6 illustrates a case where a first detection area DA1 (region A22) is selected by the user. For example, the user selects the first detection area DA1 by touching the region A22 with a finger FI. In Fig. 6, the region A22 selected by the user is indicated by diagonal lines. In addition, the user can select the first detection area DA1 (region A22) and then select a second detection area DA2 (region A32).

In addition, the user may input the range (the upper left and lower right X and Y coordinates) of one of the regions A11 to A44 to designate the detection area.

Next, the requirement setter 320 sets a requirement related to movement of the mobile object (step S102). For example, for each of the set detection areas, the user inputs a requirement through the operation display section 306 or selects information on the requirement stored in the auxiliary storage section 304.

Next, the video acquirer 330 acquires a video obtained by imaging the predetermined region including a mobile object (step S103). For example, the imaging apparatus 200 images the one person 500 moving in the predetermined region, and transmits the video of the person 500 that has been imaged to the video acquirer 330. The video acquirer 330 receives and acquires the video of the person 500 from the imaging apparatus 200, and transmits the acquired video to the second information processing apparatus 400. Furthermore, the recorder 370 records the video together with the time and date when the video was imaged.

Next, the skeleton detector 410 detects skeleton information of the mobile object included in the predetermined region (step S104). The skeleton detector 410 detects skeleton information of a person HM from a video including a plurality of frames of captured images acquired by the video acquirer 330, and outputs the skeleton information to the speed calculator 340 and the display section 380. As illustrated in Fig. 7, the display section 380 causes the display DP to display the joint points of the person 500 and the nodes connecting the joint points to each other from the skeleton information in a manner superimposed on the person HM in the video IM. In Fig. 7, marks "○" at positions of the eyes, nose, neck, shoulders, elbows, wrists, waist, knees, ankles, and the like of the person HM correspond to joint points, and black lines connecting the marks "○" correspond to nodes.

The speed calculator 340 determines whether or not a specific joint point (for example, the ankle) of the person HM is on the detection area on the basis of the skeleton information of the person HM. The speed calculator 340 detects, on the basis of the determination result, entry of the person HM in the video IM into the detection area. To be more specific, in a case where the specific joint point of the person HM moves from a position outside the first detection area DA1 to a position inside the first detection area DA1, the speed calculator 340 detects entry of the person HM into the first detection area DA1. Similarly, in a case where the specific joint point of the person HM moves from a position outside the second detection area DA2 to a position inside the second detection area DA2, the speed calculator 340 detects entry of the person HM into the second detection area DA2.

In addition, the display section 380 highlights (or colors with a first color) the second detection area D2 in which entry of the person HM is detected. In addition, the display section 380 thickens or colors with a second color the contour line of the first detection area D1 in which entry of the person HM was detected before entry of the person HM is detected in the second detection area D2. In this way, by making the display forms of the first detection area D1 and the second detection area D2 different from each other, the user can easily determine entry of the person HM into the detection area.

Next, the speed calculator 340 specifies the target mobile object (step S105). In a case where a plurality of persons are included in the video, the speed calculator 340 specifies a person whose movement speed is to be calculated (hereinafter, also referred to as a "target person"). For example, the user designates the target person by touching or clicking an image region corresponding to the target person on the display DP through the operation display section 306. Note that a plurality of target persons may be designated. In addition, in a case where no target person is designated, all persons included in the video may be specified as target persons. In the example illustrated in Fig. 7, since only one person HM is included in the video, the person HM is specified as the target person.

Furthermore, the speed calculator 340 tracks how each of the specified target persons has moved between frames. For example, the speed calculator 340 assigns an identification (ID) to each target person and holds the assigned ID until the end of monitoring. Thus, the user can monitor whether the plurality of persons appearing in the video satisfy the requirement individually. In addition, after it is detected that a target person does not satisfy the requirement, the user can easily visually recognize the target person who does not satisfy the requirement, and therefore, can easily grasp the presence of the target person.

Next, the speed calculator 340 calculates information on the movement speed of the mobile object (step S106). As illustrated in Fig. 8, for example, a case in which the person HM walks and moves in the X direction is assumed. After detecting entry of the person HM into the second detection area DA2 in a frame 1, the speed calculator 340 detects entry of the person HM into a third detection area DA3 in a frame n. The speed calculator 340 calculates the information on the movement speed of the mobile object on the basis of information on the movement time from detection of entry of the person HM into the second detection area DA2 to detection of entry of the person HM into the third detection area DA3 and the distance between the second detection area DA2 and the third detection area DA3 in which entry of the person HM has been detected. The distance between the detection areas may be the distance between the detection areas in the real space or the number of pixels between the detection areas on the video. In addition, the information on the movement time may also be the time or the number of frames taken for the mobile object to move the distance between the detection areas.

The distance between the second detection area DA2 of the person HM and the third detection area DA3 (the distance at which the person HM has moved linearly between both detection areas) corresponds to, for example, one side L [m] of the grid of the detection area in the real space. In addition, a movement time T1 from entry of the person HM into the second detection area DA2 to entry of the person HM into the third detection area D3A corresponds to a time calculated by the number of frames n ÷ the frame rate [fps]. Therefore, the speed calculator 340 can calculate the average movement speed V1 = L/T1 [m/s] of the person HM from the second detection area DA2 to the third detection area DA3.

Furthermore, as illustrated in Fig. 9, in a case where the number of frames is m (< n), a movement time T2 from entry of the person HM into the second detection area DA2 to entry of the person HM into the third detection area DA3 corresponds to a time calculated by the number of frames m ÷ the frame rate (fps). Therefore, the speed calculator 340 can calculate average movement speed V2 = L/T2 [m/s] of the person HM from the second detection area to the third detection area. Since T1 > T2, V1 < V2.

In addition, the movement speed of the person HM in the Y direction can also be calculated similarly to the movement speed in the X direction. For example, as illustrated in Figs. 10 and 11, a case where the person HM moves from the back to the front of the two-dimensional region MA (i.e., in the -Y direction) is assumed. The speed calculator 340 detects entry of the person HM into a fourth detection area DA4 and then detects entry of the person HM into a fifth detection area DA5. The speed calculator 340 calculates information on the movement speed of the person HM on the basis of information on the movement time from detection of entry of the person HM into the fourth detection area DA4 to detection of entry of the person HM into the fifth detection area DA5 and the distance between the fourth detection area DA4 and the fifth detection area DA5 in which entry of the person HM has been detected. In the example illustrated in Figs. 10 and 11, the distance between the fourth detection area DA4 and the fifth detection area DA5 is M [m] × 2, M [m] being one side of the grid of the detection area in the real space. In addition, the information on the movement time is a time T3 obtained by dividing the number of frames from entry of the person HM into the fourth detection area DA4 to entry of the person HM into the fifth detection area DA5 after exit from the fourth detection area DA4 by the frame rate. Therefore, the speed calculator 340 can calculate the average movement speed V3 = 2L/T3 [m/s] of the person HM from the fourth detection area DA4 to the fifth detection area DA5.

In this way, the skeleton detector 410 estimates the position (of the ankle) of the person HM on the basis of the skeleton information of the person. The speed calculator 340 calculates information on the movement speed of the person on the basis of the estimated position (of the ankle) of the person.

Alternatively, the speed calculator 340 can calculate the movement speed of the person HM in the Y direction also by the following method. The size of the person HM in the video IM is larger when the person HM is on the front side (Fig. 11) than when the person HM is on the back side (Fig. 10). Therefore, the information on the movement speed may also be calculated on the basis of the time change rate of the size of the mobile object.

The size of the person HM can be estimated by, for example, a person rectangle. Person rectangles BX1 and BX2 illustrated in Figs. 10 and 11 are regions including the joint points and nodes of the person HM in the captured images, and may reflect the positions, sizes, and postures of the person HM. In this way, by using the person rectangles BX1 and BX2 each representing the size of the person HM based on the skeleton information, it is also possible to cope with a change in the apparent size according to the position of the person HM in the Y direction.

Note that the person rectangles BX1 and BX2 can also be estimated by using, for example, a trained model of a neural network that has trained in advance to estimate a person rectangle from a captured image including a person. As a trained model for estimating a person rectangle from an image, for example, a model such as R-CNN, Fast R-CNN, Faster R-CNN (https://arxiv.org/abs/1506.01497), YOLO (https://arxiv.org/abs/1506.02640), SSD (https://arxiv.org/abs/1512.02325), or the like may be used.

On the other hand, the size of the person HM in the video IM may vary depending on the generation (adult or child) of the person HM. For example, in general, the body of an adult is larger than that of a child in many cases. In a case where the body of the adult is larger than the body of the child, when the child and the adult are at the same position in the Y direction in the video IM, the adult is larger than the child. That is, the area of an adult is larger than the area of a child.

Therefore, a correspondence relationship between the size of the person rectangle and the attribute information of the person and the position of the person in the Y direction is examined in advance, so that the position of the target person in the Y direction may be estimated from the size of the rectangle of the target person.

Alternatively, the size of the person may be corrected on the basis of the attribute information, and a correspondence relationship between the corrected size and the position of the person in the Y direction may be examined in advance, so that the position of the target person in the Y direction may be estimated from the size of the rectangle of the target person.

In this way, the speed calculator 340 can estimate the position of the person HM in the Y direction on the basis of the skeleton information and the attribute information of the person HM. Then, the speed calculator 340 can calculate information on the movement speed of the person HM on the basis of the estimated position of the person HM.

Next, the requirement observance determiner 350 determines whether or not the movement speed of the mobile object satisfies the requirement (step S107). For example, in Figs. 10 and 11, a case where a requirement related to a movement route is set such that the user has to move in the order of the regions A21 → A22 → A23 → A24 in the section between the regions A21 and A24 is assumed. However, in the example illustrated in Figs. 10 and 11, the person HM moves in the order of the regions A24 → A23 → A22 → A21. That is, the person HM goes in the wrong direction in the section of the regions A21 to A24. In this case, the requirement observance determiner 350 determines that the movement speed of the person HM does not satisfy the requirement. To be specific, the requirement observance determiner 350 makes the determination on the basis of the fact that the sign of the movement speed of the mobile object is negative in a case where the direction of the movement in the regions A21 → A22 → A23 → A24 is positive. On the other hand, in a case where the person HM moves in the order of the regions A21 → A22 → A23 → A24, the requirement observance determiner 350 determines that the movement speed of the person HM satisfies the above-described requirement.

In addition, in the example illustrated in Fig. 9, in a case where an upper limit speed Vu in the X direction is set such that, for example, V1 < Vu < V2, the movement at the movement speed V2 is overspeed exceeding the upper limit speed Vu. In this case, the requirement observance determiner 350 determines that the movement of the person HM does not satisfy the requirement for the upper limit speed.

In addition, by setting a plurality of detection areas, it is possible to detect not only going in the wrong direction and overspeed but also a sudden U-turn or the like. A sudden U-turn may be, for example, movement from one detection area to another detection area and then returning to the one detection area again in a short time.

In addition, the requirement observance determiner 350 may determine, on the basis of the determination result of the movement means determiner 440, whether or not movement of the person HM satisfies the requirement. For example, a case where the movement route of the person HM is within a pedestrian-only zone is assumed. In a case where the movement means determiner 440 determines that the person HM is using a bicycle, the requirement observance determiner 350 determines that the movement speed of the person HM does not satisfy the requirement.

Next, in a case where the movement speed of the mobile object satisfies the requirement (step S107: YES), the notifier 360 ends the processing. On the other hand, in a case where the movement speed of the mobile object does not satisfy the requirement (step S107: NO), the notifier 360 provides a notification that the requirement is not satisfied (step S108). As illustrated in Fig. 12, in a case where the movement of the person HM does not satisfy the requirement for the movement route, the notifier 360 causes, for example, a warning "Going in the wrong direction." to be displayed on the display DP. Thus, the user is notified that the movement of the person HM does not satisfy the requirement for the movement route.

In addition, in a case where movement of the person HM does not satisfy the requirement for the speed limit, the notifier 360 causes, for example, a warning such as "Overspeed" to be displayed on the display DP. Thus, the user is notified that the movement of the person HM does not satisfy the requirement for the speed limit.

In addition, the notifier 360 can color the detection area and/or skeleton lines (joint points and nodes) of the person who is determined not to satisfy the requirement in a predetermined color (for example, red). Note that in Fig. 12, the detection area is colored in black for convenience of illustration. Thus, it becomes easy for the user to discriminate the target mobile object that does not satisfy the requirement.

In addition, in the present embodiment, the user can also check the video recorded in the auxiliary storage section 304 for a predetermined period later without monitoring the video of the mobile object in real time. In this case, if a video is simply imaged and stored, for example, when a trouble such as an accident occurs, it is not easy to find, from the imaged and stored video, a movement that is related to the trouble and does not satisfy the requirement. In the present embodiment, as illustrated in Fig. 13, the recorder 370 can record the determination result as an "image" with a time stamp. The recorder 370 records, with a time stamp, a video in which the notifier 360 has provided notification of the determination result by providing a warning indicating that the requirement is not satisfied or coloring the detection area. Thus, in a case where a trouble or the like occurs, it is easy to perform post-checking.

Further, the notifier 360 can also notify a system (for example, a server, a mobile terminal of an administrator, or the like) outside the information processing system 100 of the determination result by the requirement observance determiner 350 or record the determination result in the outside system. The notifier 360 can cooperate with the outside system to notify the surroundings or the administrator of the determination result by, for example, an SNS, an email, or a warning lamp/buzzer sounding.

As described above, in the processing of the flowchart illustrated in Fig. 4, the running detection system sets a plurality of detection areas in the video obtained by imaging the predetermined region, and sets a requirement related to movement. Subsequently, the running detection system acquires a video obtained by imaging the predetermined region including a mobile object, and detects skeleton information of the mobile object included in the video. Subsequently, the running detection system specifies the target person, and calculates information on the movement speed of the mobile object on the basis of the skeleton information of the mobile object. Then, the running detection system determines whether or not the movement speed of the person satisfies the requirement, and provides notification in a case where the movement speed does not satisfy the requirement. The processing in steps S101 to S108 illustrated in Fig. 4 may be repeated while running detection of the mobile object is performed, for example, until the processing ends due to an end instruction by the user, power-off, or the like.

### <Movable direction of mobile object, number of detection areas>

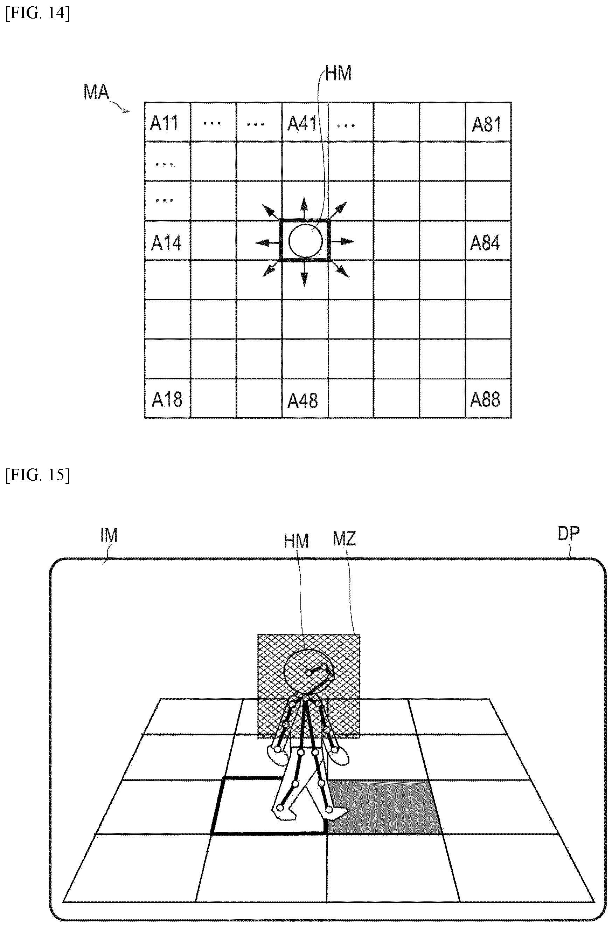

Fig. 14 is a schematic diagram illustrating the movable directions of the mobile object. The movement direction of the mobile object may be any of forward, backward, leftward, rightward, and oblique directions. Further, the number of divisions of the two-dimensional region MA into the grid-shaped regions may be increased. In the example illustrated in Fig. 14, a case where the two-dimensional region MA is divided into regions A11 to A88 (64 regions) is illustrated.

Furthermore, three or more detection areas may be set. The detection area setter 310 can set three or more detection areas that do not overlap each other in a video of the predetermined region. The speed calculator 340 calculates information on the movement speed of the mobile object on the basis of information on the movement time from entry of the mobile object into one detection area out of two arbitrary detection areas among the plurality of detection areas to entry of the mobile object into the other detection area and the distance between the one detection area and the other detection area in which entry of the mobile object has been detected.

Furthermore, the detection areas may be set so as to be arranged in a linear shape or a curved shape in a video of the predetermined region as long as the detection areas are within a range captured in the video (i.e., within the field of view of the camera 230). For example, the detection areas may be set to be arranged in a linear shape or a curved shape along a movement route constituted by a curve or a curve and a straight line. By increasing the number of the grid-shaped regions and setting the detection areas more finely, the speed calculator 340 can calculate the movement speed of the mobile object for a smaller region. Therefore, by finely setting the detection areas along the movement route of the mobile object, the speed calculator 340 can accurately calculate the movement speed of the mobile object even in a case where the mobile object moves while turning or meanders.

### <Setting of upper limit Speed Vu>

In the present embodiment, the user can set the upper limit speed Vu of the target mobile object for each two-dimensional region MA or each interval between detection areas. For example, in a case where the two-dimensional region MA is located indoors, an indoor upper limit speed Vui may be set, and in a case where the two-dimensional region MA is located outdoors, an outdoor upper limit speed Vuo may be set. In addition, an upper limit speed Vu1 may be set between the first detection area DA1 and the second detection area DA2, and an upper limit speed Vu2 different from the upper limit speed Vu1 may be set between the fourth detection area DA4 and the fifth detection area DA5.

In addition, the upper limit speed for each attribute of a person can be stored in the auxiliary storage section 304 (storage section) in advance and the requirement setter 320 can be configured to select any upper limit speed according to the attribute information of the target person. For example, an upper limit speed Vua for the attribute of an adult and an upper limit speed Vuc for the attribute of a child can be stored in the auxiliary storage section 304 in advance, and the requirement setter 320 can be configured to select the upper limit speed in accordance with whether the target person is an adult or a child. For example, the upper limit speed Vu may be set to different values depending on whether the target person is an adult or a child. This is because, for example, in a case where running (dashing) speed of a child is set as the upper limit speed, there is a possibility that the walking speed (or the fast walking speed) of an adult becomes overspeed. In this case, by setting the upper limit speed Vua for a case where the target person is an adult to a value greater than the upper limit speed Vuc for a case where the target person is a child, it is possible to prevent the speed at which an adult walks (or the speed at which an adult walks fast) from becoming overspeed. Further, the upper limit speed Vua of an adult may be set to be α times the upper limit speed Vuc of a child (for example, 1.0 < α < 2.0), and the upper limit speed Vua of an adult may change in association with the upper limit speed Vuc of a child.

Furthermore, the upper limit speed for each of movement by walking (running) and movement using movement means can be stored in the auxiliary storage section 304 in advance, and the requirement setter 320 can be configured to select the upper limit speed in accordance with the posture of the target person or the movement means. For example, it is also possible to adopt a configuration in which an upper limit speed Vuw for movement by walking (running) and an upper limit speed Vub for movement using a bicycle are stored in advance in the auxiliary storage section 304, and the upper limit speed is selected in accordance with whether the target person is in a standing position or in a sitting position (using a bicycle). The posture estimator 430 may determine that the target person is walking (running) in a case where the posture of the target person is in a standing position and determine that the target mobile object is moving by bicycle in a case where the posture of the target mobile object is in a sitting position.

For example, in a case where a sidewalk and a bicycle lane are included in the two-dimensional region MA, the upper limit speed Vuw is selected for the target person walking on the sidewalk. On the other hand, the upper limit speed Vub is selected for the target person who is moving by bicycle in the bicycle lane.

### <Privacy protection>

Fig. 15 is a schematic diagram illustrating privacy protection for the mobile object. From the viewpoint of privacy protection of the target person HM, the display section 380 can add a mosaic MZ to a body part (for example, the face, the upper half of the body, or the like) of the target person HM from which the target person HM can be identified. Thus, in a case where the video is watched by someone other than the user, the target person HM can be watched over or monitored while the privacy is protected. Note that in a case where the display section 380 displays a video in real time, the display section 380 can display the video acquired by the video acquirer 330 with the mosaic MZ added to the target person HM. In addition, the recorder 370 can record the video acquired by the video acquirer 330 as it is, or can record the video in which the mosaic MZ is added to the target person HM in the auxiliary storage section 304.

The running detection system of the present embodiment described above can achieve the following effects.

Since information on the movement speed of a mobile object is calculated on the basis of skeleton information of the mobile object, the mobile object can be detected regardless of the background of the mobile object. Furthermore, it is possible to determine, on the basis of the skeleton information, whether or not the entire mobile object has been detected. Therefore, even in a case where the monitoring region, the installation location of the camera 230, or the like is different or in a case where the size of the person changes, the movement speed of the person may be calculated with high accuracy.

In addition, in a place where an unspecified large number of mobile objects come and go, it is possible to detect a risk of overturn or collision of a mobile object before the overturn or collision occurs. Therefore, it is possible to detect the necessity of limiting the number of persons in a passage area where the number of persons is limited due to the risk of overturn or collision and to estimate the limit of the number of persons.

Furthermore, in a place where specific movements such as running, going in the wrong direction, and a sudden U-turn are prohibited, these specific movements can be detected in real time or from a recorded video and notification of the specific movements can be provided.

Furthermore, in the present embodiment, the movement speed of a mobile object is calculated on a rule basis on the basis of skeleton information detected by the trained model (machine learning) and parameters (detection area and information on a requirement). Therefore, even in a case where the user is not accustomed to machine learning, it is possible to easily calculate the movement speed of a mobile object only by setting or adjusting the parameters.

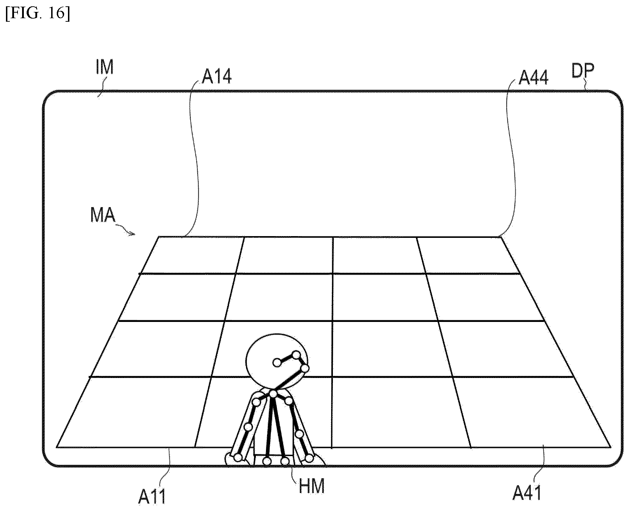

In addition, in the present embodiment, in a case where an entire mobile object is not included in a video, the mobile object can be excluded from the calculation target of the movement speed. Fig. 16 is a schematic diagram illustrating a video in a case where the mobile object is approaching the imaging apparatus 200. For example, in a case where the person 500 approaches the camera 230 and walks (runs), there is a possibility that the entire body of the person HM does not fit in the field of view of the camera 230. In the example illustrated in Fig. 16, since the lower half of the body of the person HM is not included in the video IM, the joint points of the knees and the ankles are not detected. Therefore, in the case of detecting entry of the person HM into the detection area on the basis of the position of the joint point of the ankle as described above, the speed calculator 340 cannot detect entry of the person HM into the detection area. In this case, the speed calculator 340 cannot calculate the movement speed of the person 500. Furthermore, the notifier 360 may be configured to provide a notification that the movement speed cannot be calculated. Thus, in the present embodiment, since the movement speed of the person 500 is not calculated, it is possible to prevent an erroneous determination from occurring.

In contrast, in the case of estimating the movement speed of a person by detecting the person as an object as in a conventional art, it is not possible to judge whether what is appearing in a video is the whole of a person or a half the body of the person. Therefore, in a case where a person approaches the camera and walks (runs), it is possible to estimate the movement speed of the person, but there is a possibility that the movement speed is estimated higher. As a result, it may be erroneously determined that this person is running.

The configuration of the information processing system 100 described above is a description of the main configuration for describing the features of the above-described embodiment, is not limited to the above-described configuration, and can be variously modified within the scope of the claims. In addition, configurations included in a general information processing system are not excluded.

For example, in the above-described embodiment, the case where the second information processing apparatus 400 includes the skeleton detector 410 and the first information processing apparatus 300 and the second information processing apparatus 400 function as the running detection system has been exemplified. However, the present invention is not limited to such a case, and the first information processing apparatus 300 may include the skeleton detector 410 so that the first information processing apparatus 300 is configured to function as the running detection system.

In addition, although the above-described embodiment has described the case where the user selects a plurality of detection areas, the present invention is not limited to such a case. For example, a plurality of detection areas may be set in advance in a case where the plurality of detection areas are set in a region in which distance in the real space is known, a case where the movement route of a mobile object is fixed, or the like.

In addition, the speed calculator 340 can also detect and provide notification of "running" for each or only one of "adult" and "child", for example, on the basis of the attribute information.

In addition, the means and methods for performing various processes in the information processing system 100 described above can be implemented in either a dedicated hardware circuit or a programmed computer. For example, the program may be provided by a computer-readable recording medium such as a USB memory or a digital versatile disc (DVD)-ROM, or may be provided online via a network such as the Internet. In this case, the program recorded on the computer-readable recording medium is usually transferred to and stored in a storage section such as a hard disk. In addition, the program may be provided as independent application software, or may be incorporated into software of a server or another apparatus as one function.

This application is based on Japanese Application No. 2023-077080 filed on May 9, 2023, the disclosure of which is incorporated herein by reference in its entirety.

### Reference Signs List

- 100: information processing system
- 200: imaging apparatus
- 201: bus
- 210: controller
- 220: communicator
- 230: camera
- 300: first information processing apparatus
- 301: CPU
- 302: RAM
- 303: ROM
- 304: auxiliary storage section
- 305: communication I/F
- 306: operation display section
- 310: detection area setter
- 320: requirement setter
- 330: video acquirer
- 340: speed calculator
- 350: requirement observance determiner
- 360: notifier
- 370: recorder
- 380: display section
- 400: second information processing apparatus
- 410: skeleton detector
- 420: attribute information acquirer
- 430: posture estimator
- 440: movement means determiner

## Claims

1. A running detection system comprising:
a video acquirer that acquires a video obtained by imaging a predetermined region including a mobile object;
a skeleton detector that detects skeleton information of the mobile object included in the video; and
a speed calculator that calculates information on a movement speed of the mobile object on a basis of the skeleton information of the mobile object.

2. The running detection system according to claim 1 further comprising:
a detection area setter that sets a plurality of detection areas that do not overlap each other for detecting the mobile object in the video of the predetermined region,
wherein the speed calculator calculates the information on the movement speed of the mobile object on a basis of information on a movement time from detection of entry of the mobile object into one detection area of the plurality of detection areas to detection of entry of the mobile object into another detection area of the plurality of detection areas, and a distance between the one detection area and the another detection area in which entry of the mobile object has been detected.

3. The running detection system according to claim 2,
wherein the skeleton information includes position information of a plurality of joint points of the mobile object and information on connection between the plurality of joint points, and
the speed calculator determines, on a basis of the skeleton information of the mobile object, whether or not a specific joint point of the mobile object is located in the one detection area or the another detection area, and detects, on a basis of a determination result, entry of the mobile object into the one detection area or the another detection area.

4. The running detection system according to claim 1, wherein the speed calculator estimates a position and/or a size of the mobile object on a basis of the skeleton information of the mobile object, and calculates the information on the movement speed of the mobile object on a basis of the position and/or the size of the mobile object that has been estimated.

5. The running detection system according to claim 4 further comprising:
an attribute information acquirer that acquires attribute information of the mobile object on a basis of the skeleton information of the mobile object,
wherein the speed calculator calculates the information on the movement speed of the mobile object on a basis of the skeleton information and the attribute information of the mobile object.

6. The running detection system according to claim 5,
wherein the mobile object is a person,
the attribute information is information on a generation of the mobile object, and
the speed calculator corrects the size of the mobile object on a basis of the attribute information and calculates the information on the movement speed of the mobile object on a basis of the size that has been corrected.

7. The running detection system according to claim 1 further comprising:
a posture estimator that estimates a posture of the mobile object on a basis of the skeleton information of the mobile object; and
a movement means determiner that determines whether or not the mobile object is using movement means,
wherein the mobile object is a person,
the posture estimator determines whether the mobile object is in a standing position or in a sitting position, and
the movement means determiner determines that the mobile object is using movement means in a case where the mobile object is in the sitting position as a result of determination by the posture estimator.

8. The running detection system according to claim 2, wherein the plurality of detection areas are set so as to be arranged in a linear shape or a curved shape in the video of the predetermined region.

9. The running detection system according to claim 1 further comprising: a recorder that records the video acquired by the video acquirer together with time and date when the video was imaged.

10. The running detection system according to any one of claims 1 to 9 further comprising:
a requirement setter that sets a requirement related to movement of the mobile object;
a requirement observance determiner that determines, on a basis of the information on the movement speed calculated by the speed calculator, whether or not the movement speed of the mobile object satisfies the requirement; and
a notifier that provides a notification in a case where the movement speed of the mobile object does not satisfy the requirement as a result of determination by the requirement observance determiner.

11. The running detection system according to claim 10,
wherein the requirement related to the movement is a requirement for an upper limit speed,
the requirement observance determiner determines whether or not the movement speed of the mobile object satisfies the requirement for the upper limit speed, and
the notifier provides the notification in a case where the movement speed of the mobile object does not satisfy the requirement for the upper limit speed.

12. The running detection system according to claim 11 further comprising:
a storage section that stores an upper limit speed for each attribute of the mobile object; and
an attribute information acquirer that acquires attribute information of the mobile object on a basis of the skeleton information of the mobile object,
wherein the requirement setter sets an upper limit speed of the mobile object in accordance with the attribute information of the mobile object.

13. A running detection method comprising:
a step (a) of acquiring a video obtained by imaging a predetermined region including a mobile object;
a step (b) of detecting skeleton information of the mobile object included in the video; and
a step (c) of calculating information on a movement speed of the mobile object on a basis of the skeleton information of the mobile object.

14. The running detection method according to claim 13 further comprising: a step (d) of determining whether or not the movement speed of the mobile object satisfies a requirement on a basis of the information on the movement speed calculated in the step (c), and providing a notification in a case where the movement speed of the mobile object does not satisfy the requirement as a result of determination.

15. A running detection program for causing a computer to execute a process including:
a step (a) of acquiring a video obtained by imaging a predetermined region including a mobile object;
a step (b) of detecting skeleton information of the mobile object included in the video; and
a step (c) of calculating information on a movement speed of the mobile object on a basis of the skeleton information of the mobile object.

16. The running detection program according to claim 15, wherein the process further includes a step (d) of determining whether or not the movement speed of the mobile object satisfies a requirement on a basis of the information on the movement speed calculated in the step (c), and providing a notification in a case where the movement speed of the mobile object does not satisfy the requirement as a result of determination.
